# EUROPEAN PATENT SPECIFICATION

(11) **EP 3 192 646 B1**
(45) Date of publication and mention of the grant of the patent: **24.04.2019**
(21) Application number: 15833153.8
(22) Date of filing: 21.08.2015
(51) Int. Cl.: B29D 30/06, B29C 33/02, B29C 35/02, B60C 5/01, B60C 15/06

(54) **METHOD FOR MANUFACTURING TIRE, AND TIRE**
VERFAHREN ZUR HERSTELLUNG EINES REIFENS SOWIE REIFEN
PROCÉDÉ DE FABRICATION D'UN PNEU, ET PNEU

(30) Priority: 21.08.2014 JP 2014168448
(43) Date of publication of application: 19.07.2017
(73) Proprietor: Bridgestone Corporation, Tokyo 104-8340 (JP)
(72) Inventor: HASEGAWA, Keiichi, Tokyo 104-8340 (JP); KOUNO, Yoshihide, Tokyo 104-8340 (JP)
(74) Representative: Oxley, Robin John George
(86) International application number: PCT/JP2015/073591
(87) International publication number: WO 2016/027893

(56) References cited:
- WO-A1-2014/171521
- GB-A- 1 219 702
- JP-A- H08 337 104
- JP-A- 2002 120 509
- JP-A- 2006 248 318
- JP-A- 2012 061 893
- US-A- 4 082 490
- US-A1- 2013 139 938
- US-A1- 2013 139 941

## Description

### Technical Field

The present invention relates to a tire manufacturing method and a tire, and relates in particular to a tire manufacturing method and a tire in which a tire frame member is formed using a resin material.

### Background Art

Japanese Patent Application Laid-Open (JP-A) No. H03-143701 describes a tire including a tire frame member formed using a thermoplastic elastomer. Attention is also drawn to the disclosures of US 2013/139938 A1, GB 1219702 A, US 4082490 A and US 2013/139941 A1.

### SUMMARY OF INVENTION

### Technical Problem

However, in the tire described in JP-ANo. H03-143701, side portions of the tire frame member are exposed. There is accordingly room for improvement from the perspectives of securing weather resistance, preventing scratches, and so on at exposed portions of the tire frame member. Investigations have therefore been made into covering the exposed portions such as the side portions of the tire frame member using a rubber or the like that has superior weather resistance and scratch resistance, as disclosed in US 2013/139938 A1.

However, in cases in which unvulcanized rubber that will form the rubber covering the side portions is stuck onto the side portions of the tire frame member and the unvulcanized rubber is then vulcanized inside a vulcanization mold, there is only a small overall volume of unvulcanized rubber, and so the flow of unvulcanized rubber is weak, and sometimes air inside the unvulcanized rubber cannot be sufficiently removed.

In consideration of the above circumstances, an object of the present invention is to provide a tire manufacturing method and a tire manufactured by the manufacturing method that suppress air from being incorporated in rubber covering a tire frame member in cases in which the tire frame member is formed using a resin material.

### Solution to Problem

A tire manufacturing method of a first aspect of the present invention is a method according to claim 1. A tire manufacturing method of a second aspect of the present invention is a method according to claim 3.

A tire of a third aspect of the present invention is manufactured using the tire manufacturing method of the first or second aspect.

### Advantageous Effects of Invention

As explained above, the tire manufacturing method of the first or second aspect of the present invention is capable of suppressing air from being incorporated in the rubber covering the tire frame member in cases in which the tire frame member is formed using a resin material.

### BRIEF DESCRIPTION OF DRAWINGS

Fig. 1 is a cross-section taken along the tire width direction of a tire of a first exemplary embodiment of the present invention.
Fig. 2 is an enlarged perspective view of a portion of the tire indicated by the arrow 2 in Fig. 1.
Fig. 3 is a cross-section taken along line 3-3 in Fig. 2.
Fig. 4 is a plan view of ribs formed on an inner face of covering rubber of the tire in Fig. 1.
Fig. 5 is a cross-section of the surroundings of a bead portion taken along the tire width direction, illustrating a state in which unvulcanized rubber that has been stuck to a tire frame member is being vulcanized in a tire manufacturing method of the first exemplary embodiment of the present invention.
Fig. 6 is a cross-section taken along line 6-6 in Fig. 5.
Fig. 7 is a plan view of an inner side mold face of a vulcanization bladder in an expanded state.
Fig. 8 is a cross-section perspective view illustrating the vicinity of a bead portion of a tire of a second exemplary embodiment of the present invention.
Fig. 9 is a cross-section perspective view illustrating the vicinity of a bead portion of a tire of a third exemplary embodiment of the present invention.

### DESCRIPTION OF EMBODIMENTS

Explanation follows regarding exemplary embodiments of the present invention, while giving examples of the exemplary embodiments. In the drawings, the arrow TW indicates the tire width direction, the arrow TR indicates the tire radial direction (a direction orthogonal to the tire axis of rotation (not illustrated in the drawings)), and the arrow TC indicates the tire circumferential direction. In the below explanation, the tire radial direction side that is nearer to the tire axis of rotation is referred to as "tire radial direction inner side" and the tire radial direction side that is further from the tire axis of rotation is referred to as "tire radial direction outer side". The tire width direction side that is nearer to a tire equatorial plane CL is referred to as "tire width direction inner side" and the tire width direction side that is further from the tire equatorial plane CL is referred to as "tire width direction outer side".

Note that the method for measuring the dimensions of each part is based on the methods listed in the Japan Automobile Tire Manufacturer's Association (JATMA) YEAR BOOK 2014.

### First Exemplary Embodiment

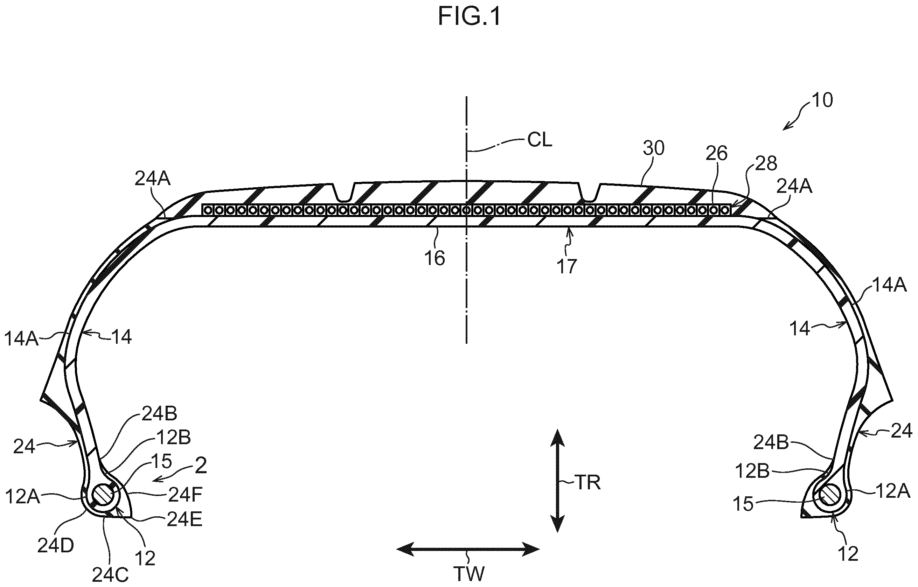

As illustrated in Fig. 1, a tire 10 of a first exemplary embodiment is a pneumatic tire employed filled internally with air, and exhibits substantially the same cross-section profile as a general, conventional pneumatic tire made of rubber.

The tire 10 of the present exemplary embodiment includes a tire frame member 17 forming a frame section of the tire 10. The tire frame member 17 is made of a resin material formed in a circular ring shape. The tire frame member 17 is configured including a pair of bead portions 12 disposed with a spacing in the tire width direction therebetween, side portions 14 that are connected to the tire radial direction outer side of the respective bead portions 12, and a crown portion 16 that is connected to the tire width direction inner side of the side portions 14 and that links tire radial direction outer side ends of the respective side portions 14 together.

Note that the circumferential direction, width direction, and radial direction of the tire frame member 17 respectively correspond to the tire circumferential direction, tire axial direction, and tire radial direction.

The tire frame member 17 is formed using resin material as the main raw material. The resin material does not include vulcanized rubber. Examples of the resin material include thermoplastic resins (including thermoplastic elastomers), thermoset resins, and other general-use resins, as well as engineering plastics (including super engineering plastics).

Thermoplastic resins (including thermoplastic elastomers) are polymer compounds of materials that soften and flow with increased temperature, and that adopt a relatively hard and strong state when cooled. In the present specification, out of these, distinction is made between polymer compounds of materials that soften and flow with increasing temperature, that adopt a relatively hard and strong state on cooling, and that have a rubber-like elasticity, considered to be thermoplastic elastomers, and polymer compounds of materials that soften and flow with increasing temperature, that adopt a relatively hard and strong state on cooling, and do not have a rubber-like elasticity, considered to be non-elastomer thermoplastic resins.

Examples of thermoplastic resins (including thermoplastic elastomers) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinked-type thermoplastic elastomers (TPV), as well as thermoplastic polyolefin-based resins, thermoplastic polystyrene-based resins, thermoplastic polyamide-based resins, and thermoplastic polyester-based resins.

Such thermoplastic resin materials have, for example, a deflection temperature under load (loading at 0.45 MPa), as defined by ISO 75-2 or ASTM D648, of 78°C or greater; a tensile yield strength, as defined by JIS K7113, of 10 MPa or greater; and a tensile elongation at break (JIS K7113), also as defined by JIS K7113, of 50% or greater. Materials with a Vicat softening temperature, as defined by JIS K7206 (method A), of 130°C or greater may be employed.

Thermoset resins are polymer compounds that cure to form a three-dimensional mesh structure with increasing temperature. Examples of thermoset resins include phenolic resins, epoxy resins, melamine resins, and urea resins.

In addition to the thermoplastic resins (including thermoplastic elastomers) and thermoset resins already listed above, general-purpose resins such as (meth)acrylic-based resins, EVA resins, vinyl chloride resins, fluororesins, and silicone-based resins may also be employed as the resin material.

Note that the tire frame member 17 may be formed of a single resin material, or may be formed of different resin materials, each having different properties, in each location (the bead portions 12, side portions 14, crown portion 16, and so on) of the tire frame member 17.

As illustrated in Fig. 1, a bead core 15, which has an annular shape extending around the tire circumferential direction, is embedded inside each bead portion 12, at a location to be fitted to a standard rim (not illustrated in the drawings) with covering rubber 24 interposed therebetween. Note that "bead portion" refers herein to a range from a tire radial direction inner side end to 30% of the tire cross section height. The bead core 15 is configured by a metal cord (such as a steel cord), an organic fiber cord, a resin-covered organic fiber cord, or a hard resin bead cord (not illustrated in the drawings). The bead core 15 may be omitted as long as the rigidity of the bead portion 12 can be sufficiently secured.

Each side portion 14 is a location configuring a side portion of the tire 10, and curves gently so as to bulge toward the tire width direction outer side on progression from the respective bead portion 12 toward the crown portion 16.

The crown portion 16 is a location that supports a tread 30, described below, laid up at the tire radial direction outer side thereof, and has an outer peripheral face with a substantially flat shape along the tire width direction.

A belt layer 28 is laid up at the tire radial direction outer side of the crown portion 16. The belt layer 28 is configured by winding a resin-covered reinforcement cord 26 in a spiral shape around the tire circumferential direction.

The tread 30 is laid up at the tire radial direction outer side of the belt layer 28. The tread 30 covers the belt layer 28. Moreover, a tread pattern (not illustrated in the drawings) is formed at the surface of the tread 30 that contacts the road surface.

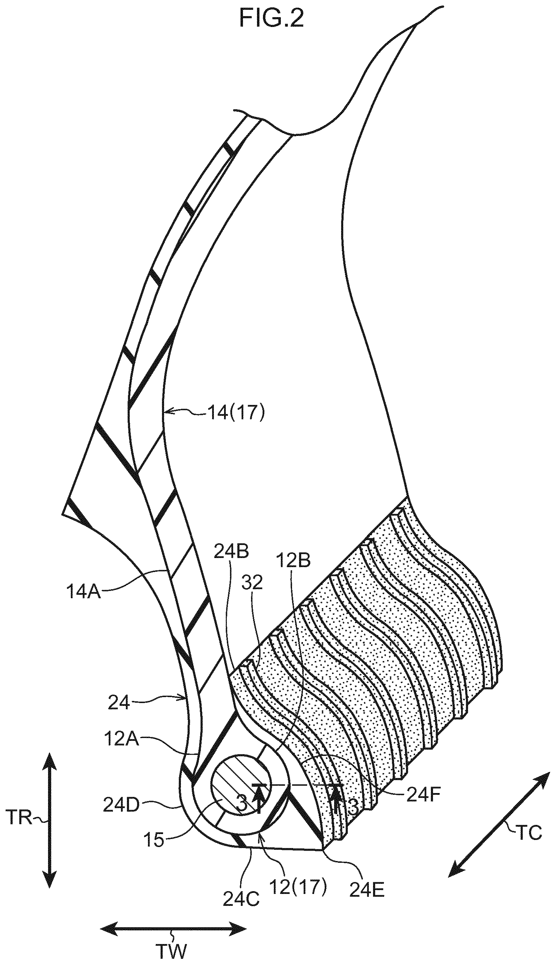

As illustrated in Fig. 1 and Fig. 2, the covering rubber 24 is laid up on the tire frame member 17 so as span from an outer face 14A at the tire outside of each side portion 14 to an inner face 12B at the tire inside of the respective bead portion 12. Specifically, the covering rubber 24 extends from the outer face 14A of the side portion 14 across an outer face 12A of the bead portion 12, and is folded back toward the inner face 12B side of the bead portion 12.

An outside end portion 24A at the tire outside of the covering rubber 24 is joined (vulcanization-bonded) to a tire width direction outer side end portion of the tread 30. Note that in the present exemplary embodiment, the entire outer face of the tire frame member 17 is covered by the tread 30 and the covering rubber 24.

A rubber material that has better weather resistance than the tire frame member 17 and a high sealing performance to a standard rim is employed as the rubber material configuring the covering rubber 24.

As illustrated in Fig. 2, a bead base 24C is formed at the covering rubber 24 at the tire radial direction inner side of each bead portion 12. In a rim-fitted state (a state in which the tire 10 has been fitted to a standard rim), the bead base 24C is mounted on a bead seat (not illustrated in the drawings) of the standard rim and contacts the bead seat. A bead heel 24D is formed at the tire width direction outer side of the bead base 24C of the covering rubber 24. The bead heel 24D has a curved shape, and contacts a rim flange of the standard rim in the rim-fitted state. A bead toe 24E is formed at the tire width direction inner side of the bead base 24C of the covering rubber 24. The bead toe 24E refers to a part of the covering rubber 24 that is an end portion at the tire width direction inner side and tire radial direction inner side thereof, and contacts the bead seat of the standard rim in the rim-fitted state.

Plural ribs 32 are formed at spacings (uniform spacings in the present exemplary embodiment) about the tire circumferential direction to an inner face 24F spanning from the bead toe 24E to an inside end portion 24B at the tire inside of the covering rubber 24. The ribs 32 extend along the tire radial direction on progression from the bead toe 24E toward the inside end portion 24B. The ribs 32 are formed of the same rubber material as the covering rubber 24.

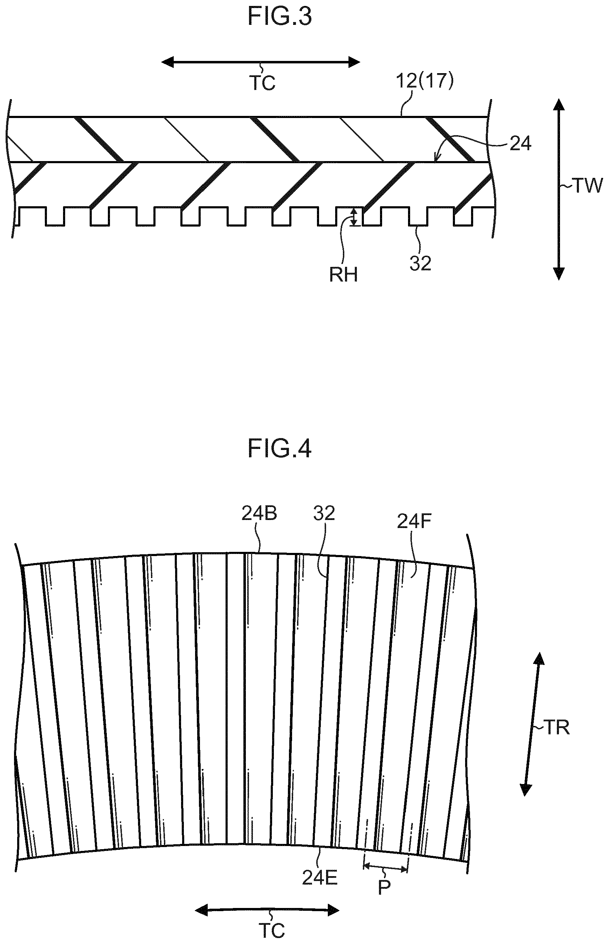

As illustrated in Fig. 3, a maximum height RH of the ribs 32 from the inner face 24F is set within a range of from 0.05 mm to 0.7 mm.

As illustrated in Fig. 4, a placement pitch P of the ribs 32 is set within a range of from 3 mm to 26 mm. Note that the placement pitch P is a value that is measured at an end portion on the bead toe 24E side of the ribs 32.

Explanation follows regarding an example of a manufacturing method of the tire 10 of the present exemplary embodiment.

First, explanation follows regarding a frame forming process. In the frame forming process, the tire frame member 17 is formed using thermoplastic resin. Note that although the tire frame member 17 is formed using thermoplastic resin in the present exemplary embodiment, the present invention is not limited to this configuration.

First, a pair of tire half parts (not illustrated in the drawings), shaped such that the tire frame member 17 is halved at the crown portion 16, are formed. The tire half parts are formed by injection molding thermoplastic resin. Note that the present invention is not limited to this configuration, and the molding method of the tire half parts using thermoplastic resin is not limited to injection molding.

Next, end portions of the crown portion 16 that is halved into the pair of tire half parts are abutted and joined together to form the tire frame member 17. Specifically, the end portions of the crown portion 16 halved into the pair of tire half parts are made to abut each other, the same resin as the thermoplastic resin forming the tire half parts is applied in a molten state to the abutting portions, and the pair of tire half parts are welded together to form the tire frame member 17. Note that a different resin from the thermoplastic resin forming the tire half parts may be employed as the resin employed to join the pair of tire half parts together. The pair of tire half parts may also be joined together by heating and melting the abutting portions. Namely, there is no particular limitation to the joining method in the present invention, as long as the pair of tire half parts can be joined together.

Explanation follows regarding an unvulcanized rubber placement process. In the unvulcanized rubber placement process, sheet-form unvulcanized rubber 25 that will form the vulcanized covering rubber 24 is disposed so as to span from the outer face 14A of each side portion 14 to the inner face 12B of the respective bead portion 12 of the tire frame member 17. Specifically, the unvulcanized rubber 25 is adhered to the tire frame member 17 using adhesive, while being extended from the outer face 14A of the side portion 14 across the inner face 12B of the bead portion 12 and folded back toward the inner face 12B of the bead portion 12.

Explanation follows regarding a belt molding process. In the belt molding process, the belt layer 28 is formed around the outer circumference of the tire frame member 17. Specifically, the resin-covered reinforcement cord 26 is wound in a spiral shape onto the crown portion 16 of the tire frame member 17 to form the belt layer 28. Note that the reinforcement cord 26 is wound onto the crown portion 16 while melting the resin part thereof, and so is firmly joined to the crown portion 16 after the resin has cooled and hardened.

Explanation follows regarding a tread placement process. In the tread placement process, unvulcanized tread rubber (not illustrated in the drawings) that will form the vulcanized tread 30 is disposed at the tire radial direction outer side of the belt layer 28. Specifically, one tire circumference worth of strip-shaped unvulcanized rubber tread is wound onto the outer periphery of the tire frame member 17, and is adhered using adhesive to respective outer peripheral faces of the belt layer 28 and the tire frame member 17.

Explanation follows regarding a vulcanization process. In the vulcanization process, unvulcanized rubber that has been adhered to the tire frame member 17 is vulcanized using a vulcanization machine 40.

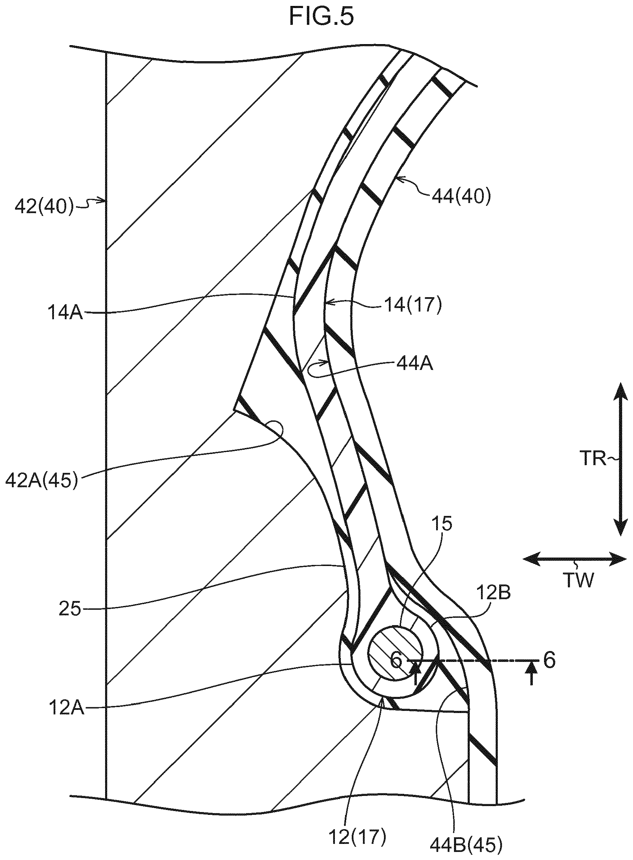

First, explanation follows regarding the vulcanization machine 40. As illustrated in Fig. 5, the vulcanization machine 40 includes a vulcanization mold 42 inside of which the tire frame member 17 is set, and a vulcanization bladder 44 that is capable of expanding and contracting and that applies pressure to the tire frame member 17 from the inside thereof by expanding at the inside of the tire frame member 17. An outer side mold face 42A is formed at the vulcanization mold 42 in order to mold a tire outside portion of the covering rubber 24. An inner side mold face 44B is formed at an outer peripheral face 44A of the vulcanization bladder 44 in order to mold a tire inside portion of the covering rubber 24. A tread mold face (not illustrated in the drawings) is also formed at the vulcanization mold 42 in order to mold the tread pattern of the tread 30 and so on. Note that in the present exemplary embodiment, mold faces 45 is formed by the outer side mold face 42A and the inner side mold face 44B.

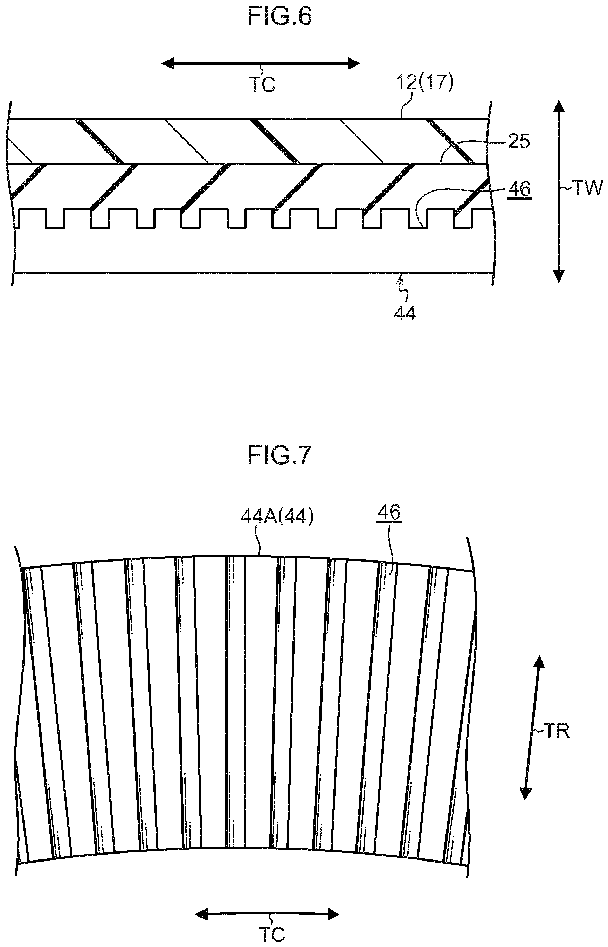

As illustrated in Fig. 7, the inner side mold face 44B of the vulcanization bladder 44 is formed in a continuous annular shape around the circumferential direction. Note that, in a state in which the tire frame member 17 has been set inside the vulcanization mold 42, the circumferential direction and radial direction of the inner side mold face 44B of the present exemplary embodiment are the same directions as the respective circumferential direction and radial direction of the tire frame member 17.

As illustrated in Fig. 6 and Fig. 7, plural recessed portions 46 are formed in the inner side mold face 44B. The plural recessed portions 46 are formed in the inner side mold face 44B so as to have spacings in the circumferential direction therebetween and so as to form groove shapes extending along a direction (the radial direction in the present exemplary embodiment) intersecting the circumferential direction in a plan view of the inner side mold face 44B (see Fig. 7).

Note that the vulcanization bladder 44 of the present exemplary embodiment has the same structure as a vulcanization bladder employed in a manufacturing method of a conventional pneumatic tire, with the exception of the fact that the inner side mold face 44B is formed at the outer peripheral face 44A.

Explanation follows regarding the vulcanization process. First, the vulcanization bladder 44 is disposed inside the tire frame member 17 in a contracted state, and then expanded so as to apply pressure to the tire frame member 17 from the inside thereof.

The tire frame member 17 is then set together with the vulcanization bladder 44 inside the vulcanization mold 42. Further pressure is then applied to the tire frame member 17 from the inside thereof, and the unvulcanized rubber 25 and the unvulcanized tread rubber are vulcanized by being heated at a specific temperature and for a specific duration while being pressed against the mold faces. The unvulcanized rubber 25 and the unvulcanized tread rubber are thereby vulcanization-molded to reach the degree of vulcanization of a final product.

Note that during vulcanization, the unvulcanized rubber 25 flows inside a space (cavity) formed between the mold faces 45 and an outer face (the outer face 12A and the outer face 14A) of the tire frame member 17, and some of the unvulcanized rubber 25 enters the recessed portions 46. The ribs 32 are formed on the inner face 24F of the vulcanized covering rubber 24 by the unvulcanized rubber 25 that has entered the recessed portions 46.

Next, the vulcanized tire 10 is removed from the vulcanization mold 42, after which the vulcanization bladder 44 is made to contract and is removed from inside the tire frame member 17. The tire 10 is thereby complete.

Note that the sequence of the respective processes of the tire manufacturing method according to the present exemplary embodiment may be changed as appropriate. For example, the belt layer 28 may be disposed on the crown portion 16 of the tire frame member 17 and the unvulcanized tread rubber disposed on the belt layer 28 prior to disposing the unvulcanized rubber 25 on the tire frame member 17. Moreover, configuration may be such that the unvulcanized rubber 25 is disposed on the tire half parts prior to joining the pair of tire half parts together.

Explanation follows regarding operation and advantageous effects of the manufacturing method of the tire 10 of the present exemplary embodiment.

In the manufacturing method of the tire 10, the tire frame member 17 is formed in the frame forming process, and the unvulcanized rubber 25 is disposed so as to span from the outer face 14A of each side portion 14 to the inner face 12B of the respective bead portion 12 of the tire frame member 17 in the unvulcanized rubber placement process. The unvulcanized rubber 25 is then vulcanized by the vulcanization machine 40 in the vulcanization process.

Note that, as illustrated in Fig. 7, the vulcanization machine 40 formed with the recessed portions 46 in the inner side mold face 44B is employed in the vulcanization process, such that the unvulcanized rubber 25 flows into the recessed portions 46 during vulcanization. Thus, the unvulcanized rubber 25 flows more readily into the space (cavity) formed by the mold faces 45 of the vulcanization machine 40 and the outer face (outer faces (the outer face 12A and the outer face 14A) of the tire frame member 17 than in configurations employing a vulcanization machine with a flat-shaped inner side mold face, for example. This enables air to be sufficiently removed from the unvulcanized rubber 25 during vulcanization, and suppresses air from being incorporated in the vulcanized covering rubber 24.

Moreover, the recessed portions 46 are formed in the inner side mold face 44B among mold faces 45 of the vulcanization machine 40, such that the unvulcanized rubber 25 disposed between the outer face 14A of each side portion 14 and the outer face 12A of the respective bead portion 12 in the above-described space (cavity) flows toward the inner face 12B side of the bead portion 12. In other words, the unvulcanized rubber 25 that is pressed against the vulcanization mold 42 by the vulcanization bladder 44 flows into the recessed portions 46 as an escape. Thus, air inside the unvulcanized rubber 25 is more readily removed from the inner face 12B side of the bead portion 12. This effectively suppresses air from being incorporated in the covering rubber 24 covering the outer face 14A of each side portion 14 and the outer face 12A of the respective bead portion 12 of the vulcanized tire 10, such that the durability of the covering rubber 24 covering the outer face 14A of each side portion 14 and the outer face 12A of the respective bead portion 12 is improved. Thus, the weather resistance and the scratch resistance of the tire 10 are improved.

In the manufacturing method of the tire 10, the plural recessed portions 46 are formed about the circumferential direction of the inner side mold face 44B with spacings therebetween, such that the unvulcanized rubber 25 is made to flow still more readily toward the inner face 12B side of the bead portion 12 inside the above-described space (cavity). Moreover, in a plan view of the inner side mold face 44B, the recessed portions 46 are formed in groove shapes extending along a direction (the radial direction in the present exemplary embodiment) intersecting the circumferential direction of the inner side mold face 44B. Thus, air that has been conveyed toward the inner face 12B side of the bead portion 12 by the flow of the unvulcanized rubber 25 passes through the recessed portions 46 and is more readily removed from an end portion of the unvulcanized rubber 25 on the inner face 12B side of the bead portion 12. This further improves the durability of the covering rubber 24 covering the outer face 14A of each side portion 14 and the outer face 12A of the respective bead portion 12 of the tire 10.

Furthermore, in the manufacturing method of the tire 10, pressure is applied to the tire frame member 17 from the inside thereof by the vulcanization bladder 44 and the unvulcanized rubber 25 is pressed against the outer side mold face 42A during vulcanization. Thus, the unvulcanized rubber 25 between the outer side mold face 42A of the vulcanization mold 42, and both the outer face 14A of each side portion 14 and the outer face 12A of the respective bead portion 12 of the tire frame member 17, flows still more readily toward the inner face 12B side of the bead portion 12.

In the tire 10, air is suppressed from being incorporated in the covering rubber 24 that covers spanning from the outer face 14A of each side portion 14 across the outer face 12A of the respective bead portion 12 to the inner face 12B of the bead portion 12 of the tire frame member 17. Thus, the durability of the covering rubber 24 is improved, and the weather resistance and scratch resistance of the tire 10 are also improved.

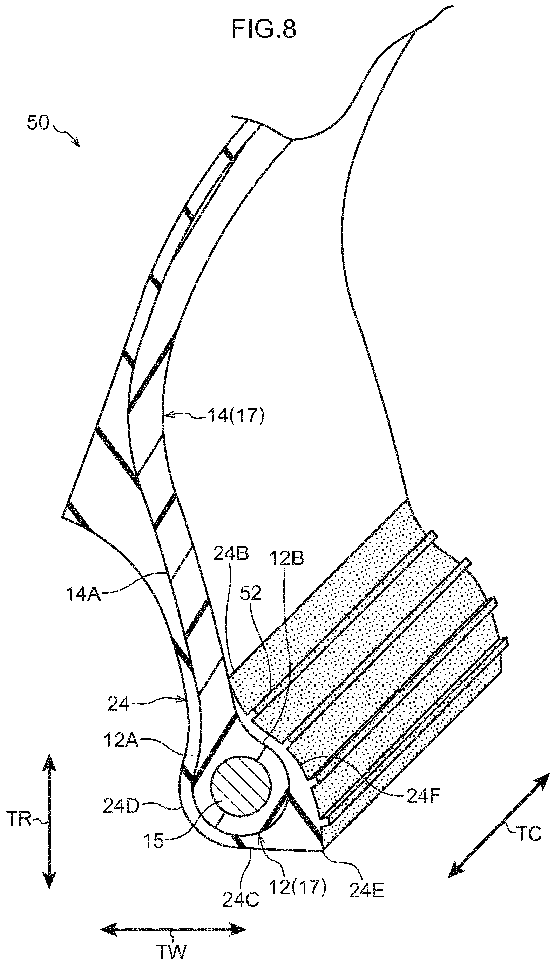

As illustrated in Fig. 7, in the manufacturing method of the tire 10 of the first exemplary embodiment, the plural groove shaped recessed portions 46, which extend in a direction (the radial direction in the first exemplary embodiment) intersecting the circumferential direction in a plan view of the inner side mold face 44B, are formed in the inner side mold face 44B of the vulcanization bladder 44 with spacings in the circumferential direction therebetween. Thus, the plural ribs 32, which extend in a direction intersecting the circumferential direction in a plan view of the inner face 24F, are formed on the inner face 24F of the covering rubber 24 of the vulcanized tire 10 with spacings in the circumferential direction therebetween. However, the present invention is not limited to this configuration. As in a tire 50 of a second exemplary embodiment illustrated in Fig. 8, for example, plural recessed portions (not illustrated in the drawings) corresponding to ribs 52 may be formed in the inner side mold face 44B of the vulcanization bladder 44, such that the plural ribs 52, which each extend continuously around the circumferential direction in a plan view of the inner face 24F, are formed in the inner face 24F of the vulcanized covering rubber 24 with spacings in the tire radial direction therebetween. Specifically, the plural groove-shaped recessed portions, which each extend continuously around the circumferential direction in a plan view of the inner side mold face 44B, may be formed in the inner side mold face 44B with spacings in the radial direction therebetween. In cases such as the above, in which the recessed portions are extended around the circumferential direction of the inner side mold face in a plan view of the inner side mold face 44B, the capacity of the recessed portions forming an escape for the unvulcanized rubber 25 during vulcanization increases, and so the unvulcanized rubber 25 flows even more readily.

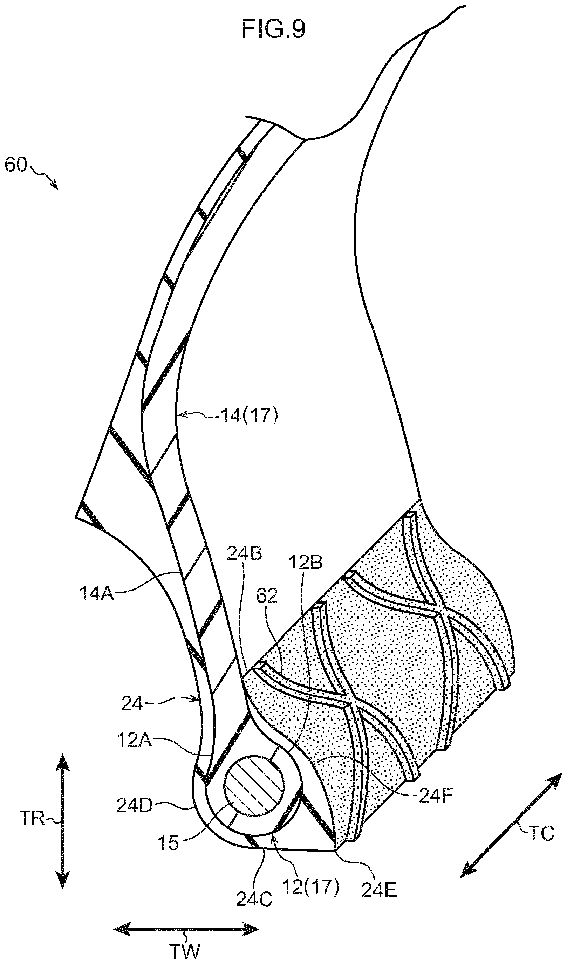

As in a tire 60 of a third exemplary embodiment illustrated in Fig. 9, for example, plural recessed portions (not illustrated in the drawings) corresponding to ribs 62 may be formed in the inner side mold face 44B of the vulcanization bladder 44, such that the plural ribs 62, which extend diagonally with respect to the circumferential direction and intersect each other to form X-shapes in a plan view of the inner face 24F, are formed in the inner face 24F of the vulcanized covering rubber 24 with spacings in the tire radial direction therebetween. Specifically, the plural groove-shaped recessed portions, which extend diagonally with respect to the circumferential direction and intersect each other to form X-shapes in a plan view of the inner side mold face 44B, may be formed in the inner side mold face 44B with spacings in the radial direction therebetween. In this case also, the capacity of the recessed portions forming an escape for the unvulcanized rubber 25 during vulcanization increases, and so the unvulcanized rubber 25 flows even more readily, similarly to the manufacturing method of the tire 50 of the second exemplary embodiment.

The manufacturing method of the tire 10 of the first exemplary embodiment is configured such that the recessed portions 46 are formed in the inner side mold face 44B of the vulcanization bladder 44; however, the present invention is not limited to this configuration. For example, a configuration may be applied in which vulcanization is performed using the vulcanization mold 42 in a state in which each bead portion 12 of the tire frame member 17 is supported with the unvulcanized rubber 25 interposed therebetween by a jig or the like including the inner side mold face 44B formed with the recessed portions 46, instead of the vulcanization bladder 44.

Exemplary embodiments of the present invention have been explained while giving examples of the exemplary embodiments; however, these exemplary embodiments are merely examples, and various modifications may be implemented within a range not departing from the scope of the present invention defined in the appended claims, and the sequence of the manufacturing processes may be changed as appropriate. Obviously, the scope of rights of the present invention is not limited to these exemplary embodiments.

[DELETED]

## Claims

1. A tire manufacturing method comprising:
a frame forming process of forming a tire frame member (17), configured including a bead portion (12), a side portion (14) connected to a tire radial direction outer side of the bead portion (12), and a crown portion (16) linked to a tire width direction inner side of the side portion (14), using a resin material;
an unvulcanized rubber placement process of disposing unvulcanized rubber (25) so as to span from an outer face (14A) of the side portion (14) across to an inner face (12B) of the bead portion (12) of the tire frame member (17); and
a vulcanization process of vulcanization molding the unvulcanized rubber (25) using a vulcanization machine (40) in which recessed portions (46) are formed in an inner side mold face (44B) among mold faces for vulcanization molding the unvulcanized rubber (25), the inner side mold face (44B) being for vulcanization molding part of the unvulcanized rubber (25) disposed on the inner face (12B) of the bead portion (12), such that plural ribs (32) are formed at spacings about a tire circumferential direction to an inner face (24F) spanning from a bead toe (24E) to an inside end portion (24B) at the tire inside of the covering rubber (24).

2. The tire manufacturing method of claim 1, wherein:
the inner side mold face (44B) is formed in a continuous annular shape around a circumferential direction; and
a plurality of the recessed portions (46) are formed in the inner side mold face (44B) so as to have a spacing between each other in the circumferential direction and so as to form groove shapes extending along a direction intersecting the circumferential direction in a plan view of the inner side mold face (44B).

3. A tire manufacturing method comprising:
a frame forming process of forming a tire frame member (17), configured including a bead portion (12), a side portion (14) connected to a tire radial direction outer side of the bead portion (12), and a crown portion (16) linked to a tire width direction inner side of the side portion (14), using a resin material;
an unvulcanized rubber placement process of disposing unvulcanized rubber (25) so as to span from an outer face (14A) of the side portion (14) across to an inner face (12B) of the bead portion (12) of the tire frame member (17); and
a vulcanization process of vulcanization molding the unvulcanized rubber (25) using a vulcanization machine (40) in which a recessed portion (46) is formed in an inner side mold face (44B) among mold faces for vulcanization molding the unvulcanized rubber (25), the inner side mold face (44B) being for vulcanization molding part of the unvulcanized rubber (25) disposed on the inner face (12B) of the bead portion (12), wherein:
the inner side mold face (44B) is formed in a continuous annular shape around a circumferential direction; and
the recessed portion is formed in a groove shape extending continuously around the circumferential direction in a plan view of the inner side mold face (44B).

4. The tire manufacturing method of any one of claims 1 to 3, wherein:
the vulcanization machine (40) includes a vulcanization bladder (44) that is capable of expanding and contracting and that applies pressure to the tire frame member (17) from the inner side upon expanding, and a vulcanization mold (42) inside of which the vulcanization bladder (44) is set during vulcanization;
the inner side mold face (44B) is formed in an outer peripheral face of the vulcanization bladder (44); and
of the mold faces, an outer side mold face (42A) forming the outer face (14A) of the side portion (14) and an outer face (12A) of the bead portion (12) is formed at the vulcanization mold (42).

5. A tire (10) manufactured using the tire manufacturing method of any one of claims 1 to 4.

## Patentansprüche

1. Reifenherstellungsverfahren, umfassend:
einen Rahmenbildungsprozess zum Bilden eines Reifenrahmenelements (17), das so konfiguriert ist, dass es einen Wulstabschnitt (12), einen Seitenabschnitt (14), der mit einer Reifenradialrichtungsaußenseite des Wulstabschnittes (12) verbunden ist, und einen Kronenabschnitt (16) einschließt, der mit einer Reifenbreitenrichtungsinnenseite des Seitenabschnitts (14) verbunden ist, unter Verwendung eines Harzmaterials;
einen Plazierungsprozess von unvulkanisiertem Kautschuk zum Anordnen von unvulkanisiertem Kautschuk (25), so dass er sich von einer Außenfläche (14A) des Seitenabschnitts (14) quer zu einer Innenfläche (12B) des Wulstabschnitts (12) des Reifenrahmenelements (17) erstreckt; und
einen Vulkanisierungsprozess zum Vulkanisierformen des unvulkanisierten Kautschuks (25) unter Verwendung einer Vulkanisiermaschine (40), in der ausgesparte Abschnitte (46) in einer Innenseitenformfläche (44B) zwischen den Formflächen zum Vulkanisierformen des unvulkanisierten Kautschuks (25) ausgebildet sind, wobei die Innenseitenformfläche (44B) zum Vulkanisierformen eines Teils des unvulkanisierten Kautschuks (25) dient, der auf der Innenfläche (12B) des Wulstabschnitts (12) angeordnet ist, so dass mehrere Rippen (32) in Abständen um eine Reifenumfangsrichtung herum zu einer Innenfläche (24F) ausgebildet sind, die sich von einer Wulstzehe (24E) zu einem inneren Endabschnitt (24B) an dem Reifeninneren des Deckkautschuks (24) erstreckt.

2. Reifenherstellungsverfahren nach Anspruch 1, wobei:
die Innenseitenformfläche (44B) in einer kontinuierlichen Ringform um eine Umfangsrichtung herum ausgebildet ist; und
eine Vielzahl der ausgesparten Abschnitte (46) in der Innenseitenformfläche (44B) so ausgebildet ist, dass sie in der Umfangsrichtung einen Abstand zueinander aufweisen und Rillenformen bilden, die sich in einer Draufsicht auf die Innenseitenformfläche (44B) entlang einer die Umfangsrichtung schneidenden Richtung erstrecken.

3. Reifenherstellungsverfahren, umfassend:
einen Rahmenbildungsprozess zum Bilden eines Reifenrahmenelements (17), das so konfiguriert ist, dass es einen Wulstabschnitt (12), einen Seitenabschnitt (14), der mit einer Reifenradialrichtungsaußenseite des Wulstabschnittes (12) verbunden ist, und einen Kronenabschnitt (16) einschließt, der mit einer Reifenbreitenrichtungsinnenseite des Seitenabschnitts (14) verbunden ist, unter Verwendung eines Harzmaterials;
einen Plazierungsprozess von unvulkanisiertem Kautschuk zum Anordnen von unvulkanisiertem Kautschuk (25), so dass er sich von einer Außenfläche (14A) des Seitenabschnitts (14) quer zu einer Innenfläche (12B) des Wulstabschnitts (12) des Reifenrahmenelements (17) erstreckt; und
einen Vulkanisierungsprozess zum Vulkanisierformen des unvulkanisierten Kautschuks (25) unter Verwendung einer Vulkanisiermaschine (40), wobei ein ausgesparter Abschnitt (46) in einer Innenseitenformfläche (44B) zwischen Formflächen zum Vulkanisierformen des unvulkanisierten Kautschuks (25) ausgebildet sind, wobei die Innenseitenformfläche (44B) zum Vulkanisierformen eines Teils des unvulkanisierten Kautschuks (25) dient, der auf der Innenfläche (12B) des Wulstabschnitts (12) angeordnet ist, wobei:
die Innenseitenformfläche (44B) in einer kontinuierlichen Ringform um eine Umfangsrichtung herum ausgebildet ist; und
der ausgesparte Abschnitt in einer Nutform ausgebildet ist, die sich in einer Draufsicht auf die Innenseitenformfläche (44B) kontinuierlich um die Umfangsrichtung erstreckt.

4. Reifenherstellungsverfahren nach einem der Ansprüche 1 bis 3, wobei:
die Vulkanisiermaschine (40) eine Vulkanisierblase (44), die sich ausdehnen und zusammenziehen kann und die beim Ausdehnen von der Innenseite aus Druck auf das Reifenrahmenelement (17) aufbringt, und eine Vulkanisierform (42) einschließt, in der die Vulkanisierblase (44) während der Vulkanisierung eingesetzt ist;
die Innenseitenformfläche (44B) in einer Außenumfangsfläche der Vulkanisierblase (44) ausgebildet ist; und
von den Formflächen eine Außenseitenformfläche (42A), die die Außenfläche (14A) des Seitenabschnitts (14) und eine Außenfläche (12A) des Wulstteils (12) bildet, an der Vulkanisierform (42) ausgebildet ist.

5. Reifen (10), der unter Verwendung des Reifenherstellungsverfahrens nach einem der Ansprüche 1 bis 4 hergestellt wird.

## Revendications

1. Procédé de fabrication de pneumatique comprenant:
un procédé de formation de châssis pour former un élément de châssis de pneumatique (17), configuré pour inclure une partie de talon (12), une partie latérale (14) reliée à un côté extérieur de la partie de talon (12) dans la direction radiale du pneumatique, et une partie sommet (16) reliée à un côté intérieur de la partie latérale (14) dans le sens de la largeur du pneumatique, à l'aide d'un matériau de résine;
un procédé de mise en place de caoutchouc non vulcanisé pour disposer du caoutchouc non vulcanisé (25) de manière à ce qu'il s'étende depuis une face externe (14A) de la partie latérale (14) jusqu'à une face interne (12B) de la partie de talon (12) de l'élément de châssis de pneumatique (17); et
un procédé de vulcanisation pour vulcaniser par moulage le caoutchouc non vulcanisé (25) en utilisant une machine de vulcanisation (40) dans laquelle des parties évidées (46) sont formées dans une face de moule de côté interne (44B) parmi les faces de moule pour le moulage par vulcanisation du caoutchouc non vulcanisé (25), la face du moule de côté interne (44B) servant au moulage par vulcanisation d'une partie du caoutchouc non vulcanisé (25) disposée sur la face interne (12B) de la partie de talon (12), de sorte que plusieurs nervures (32) soient formées à des espacements autour d'une direction circonférentielle du pneumatique vers une face interne (24F) s'étendant d'une pointe du talon (24E) à une partie d'extrémité interne (24B) au niveau de l'intérieur du caoutchouc de revêtement (24) du pneumatique.

2. Procédé de fabrication de pneumatique selon la revendication 1, dans lequel:
la face de moule du côté interne (44B) est formée dans une forme annulaire continue autour d'une direction circonférentielle; et
une pluralité de parties évidées (46) sont formées dans la face de moule du côté interne (44B) de manière à avoir un espacement entre elles dans la direction circonférentielle et à former des formes de rainures s'étendant le long d'une direction coupant la direction circonférentielle vue en plan de la face de moule du côté interne (44B).

3. Procédé de fabrication de pneumatique comprenant:
un processus de formation de châssis pour former un élément de châssis de pneumatique (17), configuré pour inclure une partie de talon (12), une partie latérale (14) reliée à un côté externe de la partie de talon (12) dans la direction radiale du pneumatique, et une partie sommet (16) reliée à un côté interne de la partie latérale (14) dans le sens de la largeur du pneumatique, à l'aide d'un matériau de résine;
un procédé de mise en place de caoutchouc non vulcanisé pour disposer du caoutchouc non vulcanisé (25) de manière à ce qu'il s'étende depuis une face externe (14A) de la partie latérale (14) jusqu'à une face interne (12B) de la partie de talon (12) de l'élément de châssis de pneumatique (17); et
un processus de vulcanisation pour mouler par vulcanisation le caoutchouc non vulcanisé (25) en utilisant une machine de vulcanisation (40) dans laquelle une partie évidée (46) est formée dans une face de moule du côté interne (44B) parmi les faces de moule pour le moulage par vulcanisation du caoutchouc non vulcanisé (25), la face de moule du côté interne (44B) servant au moulage par vulcanisation d'une partie du caoutchouc non vulcanisé (25) disposée sur la face interne (12B) de la partie de talon (12), dans laquelle:
la face de moule du côté interne (44B) est formée dans une forme annulaire continue autour d'une direction circonférentielle; et
la partie évidée est formée dans une forme de rainure s'étendant de manière continue autour de la direction circonférentielle dans une vue en plan de la face de moule du côté interne (44B).

4. Procédé de fabrication de pneumatique selon l'une quelconque des revendications 1 à 3, dans lequel:
la machine de vulcanisation (40) inclut une vessie de vulcanisation (44) capable de se dilater et de se contracter et qui applique une pression sur l'élément de châssis du pneumatique (17) depuis le côté interne lors de la dilatation, et un moule de vulcanisation (42) à l'intérieur duquel la vessie de vulcanisation (44) est installée pendant la vulcanisation;
la face de moule du côté interne (44B) est formée dans une face périphérique externe de la vessie de vulcanisation (44); et
des faces du moule, une face de moule du côté externe (42A) formant la face externe (14A) de la partie latérale (14) et une face externe (12A) de la partie de talon (12) est formée au niveau du moule de vulcanisation (42).

5. Pneumatique (10) fabriqué en utilisant le procédé de fabrication de pneumatique selon l'une quelconque des revendications 1 à 4.
